# EUROPÄISCHE PATENTSCHRIFT

(11) **EP 4 454 475 B1**
(45) Veröffentlichungstag und Bekanntmachung des Hinweises auf die Patenterteilung: **23.07.2025**
(21) Anmeldenummer: 23170501.3
(22) Anmeldetag: 27.04.2023
(51) Int. Cl.: A23G 1/20, A23G 3/02, A23G 3/22, A23G 3/20

(54) **VORRICHTUNG ZUM AUSGEBEN VON ERWÄRMTER SÜSSWARENMASSE AUF EIN FÖRDERBAND ODER AUF DARAUF GEFÖRDERTE OBJEKTE**
DEVICE FOR DISPENSING HEATED CONFECTIONERY MASS ONTO A CONVEYOR BELT OR ONTO OBJECTS CONVEYED THEREON
DISPOSITIF POUR DISTRIBUER UNE MASSE DE CONFISERIE CHAUFFÉE SUR UNE BANDE TRANSPORTEUSE OU SUR DES OBJETS TRANSPORTÉS SUR CELLE-CI

(43) Veröffentlichungstag der Anmeldung: 30.10.2024
(73) Patentinhaber: Sollich KG, 32105 Bad Salzuflen (DE)
(72) Erfinder: Sollich, Nicolas, 32105 Bad Salzuflen (DE)
(74) Vertreter: REHBERG HÜPPE + PARTNER

(56) Entgegenhaltungen:
- WO-A1-01/29748
- WO-A1-2008/137431
- WO-A1-96/23415
- CN-A- 107 668 294
- US-A1- 2021 205 835

## Beschreibung

### TECHNISCHES GEBIET DER ERFINDUNG

Die Erfindung betrifft Vorrichtungen zum Ausgeben von erwärmter Süßwarenmasse auf ein Förderband oder auf darauf geförderte Objekte. Insbesondere betrifft die vorliegende Erfindung Vorrichtungen mit den gleichlautenden Oberbegriffen der unabhängigen Patentansprüche 1 und 7.

Bei den Vorrichtungen kann es sich insbesondere um sogenannte Überziehmaschinen handeln, die dazu vorgesehen sind, Objekte, wie beispielsweise Gebäckstücke, mit einer Süßwarenmasse, insbesondere Schokolade, zu überziehen. Bei den Vorrichtungen kann es sich aber auch um Maschinen handeln, mit denen die ausgegebene Süßwarenmasse als solche in ein Produkt geformt wird, so dass dieses im Wesentlichen aus der Süßwarenmasse besteht.

### STAND DER TECHNIK

Eine bekannte Vorrichtung mit den Merkmalen der übereinstimmenden Oberbegriffe der Patentansprüche 1 und 7 ist die Überziehmaschine ENROMAT M6 der Anmelderin, siehe: https://www.sollich.com/technologie/ueberziehen/enromat/enromat-m6, wobei ENROMAT eine eingetragene Marke der Anmelderin ist. Bei dieser bekannten Überziehmaschine wird die Süßwarenmasse in Form von Schokolade aus einem Schleierkasten auf ein Förderband hin ausgegeben, um auf dem Förderband liegende Objekte mit der Schokolade zu überziehen. Um den Überzug zu formen, weist die Überziehmaschine verschiedene Produktformungseinrichtungen auf. Hierzu zählen eine Bodentunkeinrichtung, mit deren Hilfe auch der Boden der auf dem Förderband geförderten Objekte mit Schokolade beschichtet wird, eine überschüssige Schokolade von den auf dem Förderband geförderten Objekten mit Luft abblasende Abblaseinrichtung, eine überschüssige Schokoladenmasse von den auf dem Förderband geförderten Objekten abrüttelnde mechanische Rütteleinrichtung und eine Entschwänzereinrichtung, die von den auf dem Förderband geförderten Objekten mitgenommene überschüssige Süßwarenmasse entfernt. Um die Funktion dieser Produktformungseinrichtung zu optimieren, sind deren räumliche Anordnungen gegenüber dem Förderband in Form eines Gitterbands bzw. gegenüber Führungseinrichtung für das Gitterband einstellbar, die an einem Maschinenrahmen der Überziehmaschine gelagert sind. Für die Einstellung der einzelnen Produktformungseinrichtungen sind mechanische Stelleinrichtungen mit gegenüber dem Maschinenrahmen um Drehachsen manuell verdrehbaren Stellelementen vorgesehen. Die Produktformungseinrichtungen werden typischerweise von einem Maschinenführer unter Verwendung der Stellelemente und visueller Kontrolle der Produktqualität der überzogenen Objekte eingestellt. Eine optimale Einstellung der Produktformungseinrichtungen erfordert große Erfahrung des Maschinenführers. Zudem können sich die optimalen Einstellungen der Produktformungseinrichtungen im laufenden Betrieb der Überziehmaschine ändern, beispielsweise mit der Zusammensetzung der Schokolade, der Temperatur der zu überziehenden Objekte und der Umgebungstemperatur. Andere Einrichtungen der bekannten Überziehmaschine, beispielsweise Antriebseinrichtungen für das Förderband sowie Antriebs- und Masseflusseinstelleinrichtungen für die Schokolade, werden von einer elektronischen Steuerung abhängig von Vorgaben eines Süßwarenproduktionsprogramms gesteuert.

Aus der WO96/23415 ist eine weitere programmgesteuerte Süßwarenmaschine bekannt.

Es sind auch Überziehmaschinen bekannt, bei denen die mechanischen Stelleinrichtungen mit den manuell verdrehbaren Stellelementen für die Produktformungseinrichtungen durch elektromotorische Stelleinrichtungen ersetzt sind, die ebenfalls abhängig von Vorgaben des Süßwarenproduktionsprogramms von der elektronischen Steuerung der Überziehmaschine gesteuert werden. Die Integration der Produktformungseinrichtungen in die elektronisch gesteuerten Teile der Überziehmaschine ist aufwändig, weil elektromotorische Stelleinrichtungen einer lebensmittelverarbeitenden Maschine besonderen Anforderungen genügen müssen. Zudem wir eine optimale Produktqualität vielfach nicht mit festen Vorgaben für ihre Einstellung erreicht, sondern nur durch feinfühlige Optimierung unter visueller Produktkontrolle.

### AUFGABE DER ERFINDUNG

Der Erfindung liegt die Aufgabe zugrunde, Vorrichtungen mit den Merkmalen der übereinstimmenden Oberbegriffe der unabhängigen Patentansprüche 1 und 7 aufzuzeigen, bei denen mit geringem apparativem Aufwand eine schnelle Einstellung der Produktformungseinrichtungen in bewährte Stellungen mit guter Produktqualität erreicht wird und zugleich eine Feineinstellung unter visueller Produktkontrolle einfach möglich ist.

### LÖSUNG

Die Aufgabe der Erfindung wird durch Vorrichtungen mit den Merkmalen der unabhängigen Patentansprüche 1 und 7 gelöst. Die abhängigen Patentansprüche treffen bevorzugte Ausführungsformen der erfindungsgemäßen Vorrichtungen.

### BESCHREIBUNG DER ERFINDUNG

Die erfindungsgemäßen Vorrichtungen zum Ausgeben einer erwärmte Süßwarenmasse weisen jeweils einen Maschinenrahmen, ein Förderband, an dem Maschinenrahmen gelagerte Führungseinrichtungen und Antriebseinrichtungen für das Förderband, eine an dem Maschinenrahmen gelagerte Ausgabeeinrichtung, die die Süßwarenmasse in Richtung auf das Förderband ausgibt, Temperatur- und Masseflusseinstelleinrichtungen für die Süßwarenmasse, die von der Ausgabeeinrichtung ausgegeben wird, eine elektronische Steuerung, die dazu ausgebildet ist, die Antriebs-, die Temperatur- und Masseflusseinstelleinrichtungen abhängig von Vorgaben eines Süßwarenproduktionsprogramms zu steuern, eine an dem Maschinenrahmen gelagerte erste Produktformungseinrichtung, die dazu ausgebildet und angerordnet ist, auf die von der Ausgabeeinrichtung ausgegebene Süßwarenmasse einzuwirken, und eine an dem Maschinenrahmen gelagerte erste mechanische Stelleinrichtung mit einem gegenüber dem Maschinenrahmen um eine erste Drehachse manuell verdrehbaren ersten Stellelement auf. Die erste mechanische Stelleinrichtung ist dazu ausgebildet, eine erste räumliche Anordnung der ersten Produktformungseinrichtung gegenüber den Führungseinrichtungen für das Förderband und damit gegenüber dem Förderband einzustellen. Die erste räumliche Anordnung der ersten Produktformungseinrichtung ist dazu einstellbar, das Einwirken der ersten Produktformungseinrichtung auf die von der Ausgabeeinrichtung ausgegebene Süßwarenmasse zu modifizieren und insbesondere in Bezug auf die Produktqualität zu optimieren. Dabei kann der entscheidende und deshalb auch veränderbare Parameter der ersten räumlichen Anordnung der ersten Produktformungseinrichtung gegenüber dem Förderband insbesondere ein Abstand oder ein Winkel sein.

Weiterhin ist ein an dem Maschinenrahmen gelagerter erster Stellungssensor an die elektronische Steuerung angeschlossen und dazu angeordnet und ausgebildet, eine erste Stellung zu erfassen, bei der es sich um eine erste Drehstellung des ersten Stellelements gegenüber dem Maschinenrahmen oder um die daraus resultierende erste räumliche Anordnung der ersten Produktformungseinrichtung handeln kann. Die erste räumlichen Anordnung wird beispielsweise in Form eines Winkles, eines Abstands oder eines Wegs zwischen der ersten Produktformungseinrichtung und den Führungseinrichtungen für das Förderband erfasst, der sich mit der ersten Drehstellung des ersten Stellelements ändert. Statt die Drehstellung oder die erste räumlichen Anordnung mit hoher Auflösung und damit quasi-kontinuierlich zu erfassen, was grundsätzlich bevorzugt ist, kann der Stellungssensor erfassen, in welcher von mindestens zwei, drei oder vier verschiedenen diskreten Stellungen sich die erste Produktformungseinrichtung aktuell befindet. Die elektronische Steuerung ist dazu ausgebildet, die von dem Stellungssensor erfasste und an sie übermittelte erste Stellung mit einer ersten Stellungsvorgabe aus dem Süßwarenproduktionsprogramm zu vergleichen.

Bei der Vorrichtung nach Patentanspruch 1 ist dann eine erste Anzeigeeinrichtung, die in dem Stellungselement oder dem ersten Stellungselement benachbart an dem Maschinenrahmen angeordnet ist, an die Steuerung angeschlossen, und die Steuerung und die erste Anzeigeeinrichtung sind dazu ausgebildet, anzuzeigen, ob die erste Stellung mit der ersten Stellungsvorgabe übereinstimmt oder davon abweicht.

Bei der Vorrichtung nach Patentanspruch 7 ist hingegen eine Displayeinrichtung an die Steuerung angeschlossen, und die Steuerung und die Displayeinrichtung sind dazu ausgebildet, eine virtuelle erste Anzeige in einer Ansicht oder ein Bild der Vorrichtung vor oder neben dem ersten Stellelement einzublenden und mittels der virtuellen ersten Anzeige anzuzeigen, ob die mit dem Stellungssensor erfasste und an die Steuerung übermittelte erste Stellung mit der ersten Stellungsvorgabe übereinstimmt oder davon abweicht. Die Displayeinrichtung kann beispielsweise eine Augmented Reality-Brille sein, die die virtuelle erste Anzeige einblendet, wenn ihr Träger auf das erste Stellelement blickt. Die Displayeinrichtung kann auch eine Virtual Reality-Brille sein, die ihrem Träger die erste virtuelle Anzeige in ein Bild der Vorrichtung einblendet. Dabei kann es sich um ein die Vorrichtung identisch oder in von der Identität abweichender Form wiedergebendes Bild handeln.

Bei beiden Ausführungen der erfindungsgemäßen Vorrichtung nach den Patentansprüchen 1 und 7 wird ihrem Betrachter angezeigt, ob die erste Stellung, also entweder die erste Drehstellung des ersten Stellelements gegenüber dem Maschinenrahmen oder die daraus resultierende erste räumliche Anordnung der ersten Produktformungseinrichtung, der zugehörigen ersten Stellungsvorgabe aus dem Süßwarenproduktionsprogramm entspricht. Um diese Information an den Betrachter bereitzustellen, ist die jeweilige erste Stellung zu erfassen. Dies kann mit relativ einfachen Stellungssensoren und-/oder kontaktlos erfolgen, so dass der durch den Einsatz der Stellungssensoren an einer Lebensmittelproduktionsmaschine anfallende Aufwand begrenzt bleibt. Das Anzeigen, ob die aktuelle erste Stellung mit der ersten Stellungsvorgabe aus dem Süßwarenproduktionsprogramm übereinstimmt, erlaubt es, die Übereinstimmung mit der Stellungsvorgabe sehr schnell durch manuelle Betätigung des Stellelements zu erreichen, weil genau dann die Übereinstimmung der ersten Stellung mit der Stellungsvorgabe angezeigt wird. Ausgehend hiervon kann eine Feineinstellung der jeweiligen Produktformungseinrichtung unter visueller Beobachtung der resultierenden Produktqualität erfolgen.

Die erfindungsgemäßen Vorrichtungen können so auch von einem unerfahrenen Maschinenführer sehr schnell auf die durch das Süßwarenproduktionsprogramm vorgegebenen Stellungsvorgaben eingestellt werden und ermöglichen darüber hinaus eine einfache Feineinstellung der Produktformungseinrichtungen unter visueller Produktkontrolle durch den erfahrenen Maschinenführer. Zudem ist eine schnelle visuelle Kontrolle möglich, ob die jeweilige Produktformungseinrichtung in ihrer in dem Produktionsprogramm abgelegten Stellung ist. Sie ist es, wenn die Übereinstimmung der ersten Stellung mit der ersten Stellungsvorgabe angezeigt wird; sie ist es nicht, wenn keine Übereinstimmung der ersten Stellung mit der ersten Stellungsvorgabe angezeigt wird.

Vorzugsweise sind die Steuerung und die erste Anzeigeeinrichtung bzw. die Displayeinrichtung dazu ausgebildet, anzuzeigen, wie die erste Stellung nach Richtung und/oder Betrag von der ersten Stellungsvorgabe abweicht. Damit wird angezeigt, in welcher Richtung und wie sehr bzw. um wieviel die aktuelle erste Stellung verändert werden müsste, um sie in Übereinstimmung mit der Stellungsvorgabe zu bringen. Hiermit wird sowohl die erste Einstellung der erfindungsgemäßen Vorrichtung beschleunigt als auch eine detailliertere visuelle Überwachung der Vorrichtung ermöglicht. So kann beispielsweise der Maschinenführer eine angezeigte kleine Abweichung bei guter Produktqualität als akzeptabel hinnehmen, während er bei einer größeren Abweichung unter visueller Kontrolle versuchen kann, die Produktqualität durch Annähern der erfassten Stellung an die Stellungsvorgabe zu verbessern.

Konkret kann die erste Anzeigeeinrichtung mehrere um die erste Drehachse herum angeordnete erste Leuchtmittel aufweisen. Diese ersten Leuchtmittel können beispielsweise in Pulsen unterschiedlicher Frequenz und/oder zur Ausbildung eines Lauflichts unterschiedlicher Laufrichtung und/oder Geschwindigkeit und/oder zur Ausgabe eines Abschlusssignals für eine erfolgreiche Einstellung entsprechend der Stellungsvorgabe angesteuert werden. Beispielsweise kann die Lage eines angesteuerten Leuchtmittels die Richtung einer Abweichung und die Frequenz der Pulse den Betrag der Abweichung anzeigen. Die Laufrichtung eines Lauflichts kann in die Richtung weisen, in die die Stellung des Stellelements verändert werden müsste, um die Stellungsvorgabe zu erfüllen. Die Geschwindigkeit des Lauflichts kann dabei anzeigen, wie weit die aktuelle Stellung noch von der Stellungsvorgabe entfernt ist. Bei den mehreren Leuchtmitteln kann es sich um identische einfarbige Leuchtmittel handeln. Alternativ kann die Anzeigeeinrichtung ein oder mehrere mehrfarbige Leuchtmittel aufweisen, um durch deren Leuchten in unterschiedlicher Farbe die Übereinstimmung der erfassten Stellung mit der Stellungsvorgabe bzw. die Abweichung der erfassten Stellung von der Stellungsvorgabe nach Betrag und Richtung anzuzeigen. Jegliche Leuchtmittel der Anzeigeeinrichtung können in das Stellelement integriert oder neben dem Stellelement an dem Maschinenrahmen angeordnet sein.

Vorzugsweise ist der Stellungssensor, der die Drehstellung des Stellelements gegenüber dem Maschinenrahmen oder die daraus resultierende räumliche Anordnung der Produktformungseinrichtung erfasst außerhalb eines Süßwarenmassekontaktbereichs angeordnet, in dem er mit der Süßwarenmasse in Kontakt gelangen könnte. Wenn ein solcher Kontakt mit der Süßwarenmasse möglich wäre, müsste der Stellungssensor sowohl zum Schutz seiner Funktion als auch aus lebensmittelhygienischen Gründen aufwändig gekapselt werden. Dieser Aufwand ist zu vermeiden, indem der Stellungssensor außerhalb des Süßwarenmassekontaktbereichs angeordnet wird.

Der Stellungssensor kann über eine drahtgebundene oder drahtlose Signalübertragungsstrecke an die Steuerung angeschlossen sein. Das heißt, es kann ein Kabel, aber es muss kein Kabel zwischen dem Stellungssensor und der Steuerung verlaufen. Der Stellungssensor kann beispielsweise in RFID-Technologie ausgebildet sein und das Abfragen der von ihm erfassten Stellung ohne Vorhandensein eines Energiespeichers zur elektrischen Versorgung des Stellungsensors ermöglichen. Alternativ kann dem Stellungsensor eine Energiequelle in Form einer Batterie oder eines Akkumulators zugeordnet sein, um seine Schnittstelle zu einer drahtlosen Signalübertragungsstrecke mit elektrischer Energie zu versorgen. Weiterhin kann auch dann, wenn zwischen dem Stellungsensor und der Steuerung eine drahtlose Signalübertragungsstrecke vorgesehen ist, der Stellungssensor über ein Energieversorgungskabel an eine zentrale Energieversorgung der erfindungsgemäßen Vorrichtung angeschlossen sein. In einer Ausführungsform der erfindungsgemäßen Vorrichtungen ist der Stellungssensor in das Stellelement integriert, dessen Drehstellung er erfasst. In einer anderen Ausführungsform erfasst der Stellungsensor die räumliche Anordnung der Produktformungseinrichtung kontaktlos, um außerhalb des Süßwarenmassekontaktbereichs angeordnet sein zu können.

Die Steuerung der erfindungsgemäßen Vorrichtungen kann dazu ausgebildet sein, einen Betrieb der Vorrichtungen in Bezug auf eingestellte und/oder erfasste Betriebsparameter zu dokumentieren, wobei die erste Stellung von der Steuerung als erfasster Betriebsparameter dokumentiert wird. Die erfindungsgemäßen Vorrichtungen erlauben so eine Produktionsüberwachung auch in Bezug auf die erste räumliche Anordnung der ersten Produktformungseinrichtung. Die Steuerung kann weiterhin dazu ausgebildet sein, auf eine Bedienereingabe hin die aktuelle erste Stellung als neue erste Stellungsvorgabe in das Süßwarenproduktionsprogramm zu übernehmen. So kann das Süßwarenproduktionsprogramm im Betrieb der erfindungsgemäßen Vorrichtungen insbesondere dadurch verbessert werden, dass immer wieder von den ursprünglichen Stellungsvorgaben abweichende optimierte Stellungen als verbesserte Stellungsvorgaben in das Süßwarenproduktionsprogramm übernommen werden.

Die Ausgabeeinrichtung der erfindungsgemäßen Vorrichtungen kann einen Schleierkasten zum Ausgeben flüssiger Süßwarenmasse zum Überziehen von auf dem Förderband geförderten Objekten aufweisen. Die erste Produktformungseinrichtung kann dann dazu ausgebildet sein, Überzüge der Objekte mit der Süßwarenmasse zu kalibrieren, um eine gewünschte gleichmäßige Dicke dieser Überzüge zu erreichen.

Bei der Produktformungseinrichtung kann es sich ganz konkret um eine Bodentunkeinrichtung mit einer gegenläufigen, einen Bodenwall unter den auf dem Förderband geförderten Objekten definierenden Tunkwalze handeln, mit deren Hilfe die Unterseiten der geförderten Objekte mit der Süßwarenmasse überzogen werden. Die gegenläufige Tunkwalze läuft so um ihre Walzenachse um, dass sich ihre dem Förderband zugekehrte Oberseite in einer der Laufrichtung des Förderbands entgegengesetzten Richtung bewegt. Bei der Produktformungseinrichtung kann weiterhin eine einen Bodenspalt unter den auf dem Förderband geförderten Objekten definierende Leckwelle handeln, die überschüssige Süßwarenmasse von den Böden der Objekte wieder abnimmt. Weiterhin kann es sich bei der Produktformungseinrichtung um eine Abblaseinrichtung oder eine mechanische Rütteleinrichtung handeln, die überschüssige Süßwarenmasse von den auf dem Förderband geförderten Objekten mit Luft abbläst oder abrüttelt. Weiterhin kann die Produktformungseinrichtung eine Entschwänzereinrichtung sein, die von den auf dem Förderband geförderten Objekten mitgenommene überschüssige Süßwarenmasse entfernt. Die erste Produktformungseinrichtung kann auch jede andere Einrichtung sein, die formend auf das mit Hilfe der jeweiligen Vorrichtung hergestellte Produkt einwirkt und die insbesondere insoweit auf das Produkt einwirkt, wie es aus der in der Vorrichtung ausgegebenen Süßwarenmasse besteht.

Es versteht sich, dass das erfindungsgemäße Konzept nicht nur für eine einzige Produktformungseinrichtung der erfindungsgemäßen Vorrichtung realisiert werden kann. So können die erfindungsgemäßen Vorrichtungen mindestens eine an dem Maschinenrahmen gelagerte weitere mechanische Stelleinrichtung mit einem gegenüber dem Maschinenrahmen um eine weitere Drehachse manuell verdrehbaren weiteren Stellelement zum Einstellen einer weiteren räumlichen Anordnung einer an dem Maschinenrahmen gelagerten weiteren Produktformungseinrichtung gegenüber den Führungseinrichtungen aufweisen. Dann ist ein an dem Maschinenrahmen gelagerter weiterer Stellungssensor an die Steuerung angeschlossen und dazu angeordnet und ausgebildet, eine weitere Stellung zu erfassen, die eine weitere Drehstellung des weiteren Stellelements gegenüber dem Maschinenrahmen oder die daraus resultierende weitere räumliche Anordnung der weiteren Produktformungseinrichtung ist. Die Steuerung ist dann dazu ausgebildet, die weitere Stellung mit einer weiteren Stellungsvorgabe aus dem Süßwarenproduktionsprogramm zu vergleichen. Schließlich ist eine weitere Anzeigeeinrichtung, die in dem weiteren Stellelement und/oder dem weiteren Stellelement benachbart an dem Maschinenrahmen angeordnet ist, an die Steuerung angeschlossen, um anzuzeigen, ob die weitere Stellung mit der weiteren Stellungsvorgabe übereinstimmt oder davon abweicht.

Es versteht sich, dass die Steuerung und die weitere Anzeigeeinrichtung auch dazu ausgebildet sein können, Betrag und Richtung einer etwaigen Abweichung der weiteren Stellung von der weiteren Stellungsvorgabe anzuzeigen. Auch die anderen oben zu der ersten Produktformungseinrichtung erläuterten Ausführungsformen der Steuerung und der ersten Anzeigeeinrichtung können zu der weiteren Produktformungseinrichtung als Ausführungsformen der Steuerung und der weiteren Anzeigevorrichtung realisiert sein.

Vorteilhafte Weiterbildungen der Erfindung ergeben sich aus den Patentansprüchen, der Beschreibung und den Zeichnungen.

Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen.

Hinsichtlich des Offenbarungsgehalts - nicht des Schutzbereichs - der ursprünglichen Anmeldungsunterlagen und des Patents gilt Folgendes: Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen, was aber nicht für die unabhängigen Patentansprüche des erteilten Patents gilt.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Stellungssensor die Rede ist, ist dies so zu verstehen, dass genau ein Stellungssensor, zwei Stellungssensoren oder mehr Stellungssensoren vorhanden sind. Die in den Patentansprüchen angeführten Merkmale können durch weitere Merkmale ergänzt werden oder die einzigen Merkmale sein, die der Gegenstand des jeweiligen Patentanspruchs aufweist.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt eine Überziehmaschine als Ausführungsform einer erfindungsgemäßen Vorrichtung in einer ersten Seitenansicht.
- **Fig. 2**: zeigt die Überziehmaschine gemäß Fig. 1 in einer zweiten Seitenansicht; und
- **Fig. 3**: zeigt die Steuerung und eine Displayeinrichtung einer weiteren Ausführungsform einer erfindungsgemäßen Vorrichtung.

### FIGURENBESCHREIBUNG

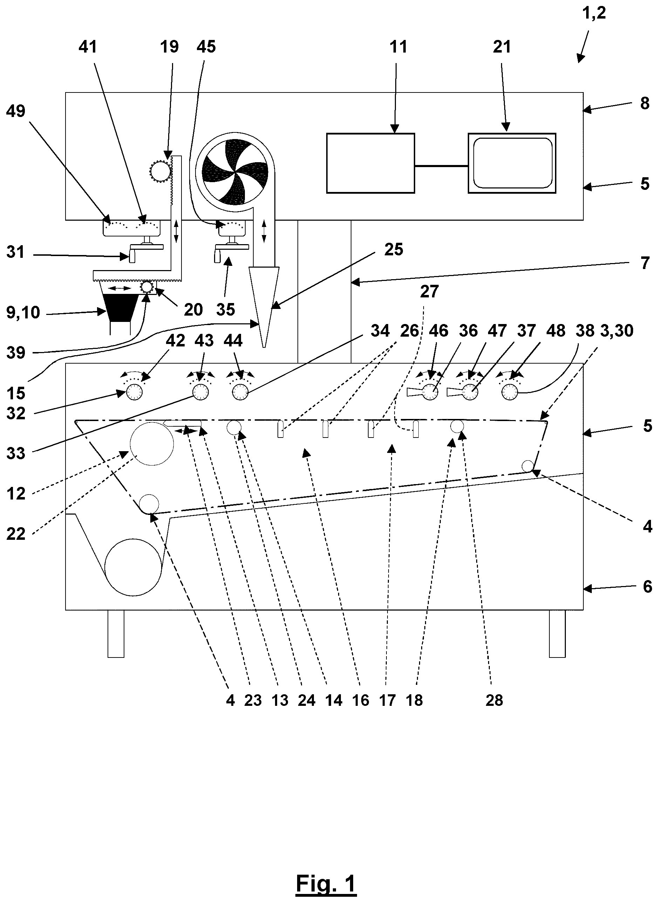

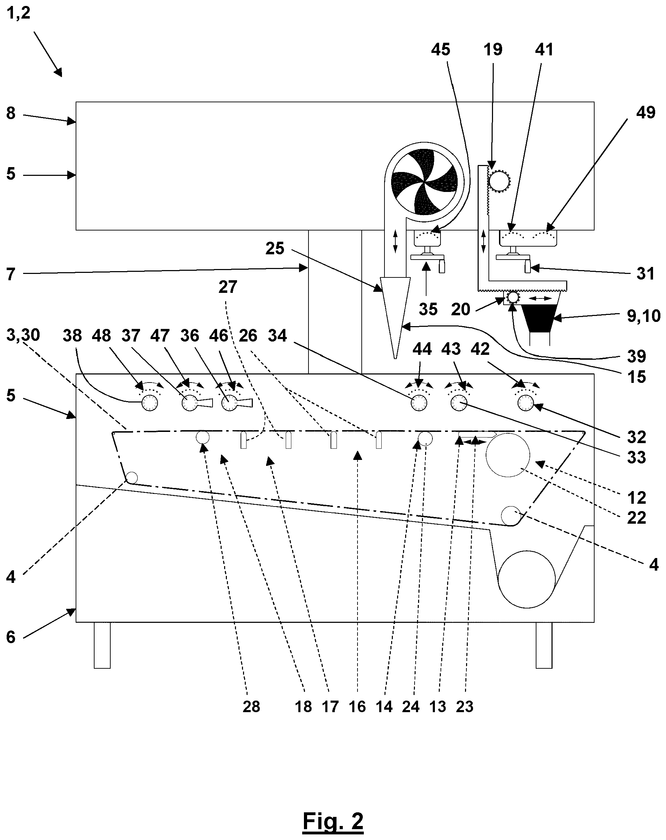

Die in den **Fig. 1** und **2** als Ausführungsform einer erfindungsgemäßen Vorrichtung 1 dargestellte Überziehmaschine 2 dient zum Überziehen von Objekten, wie beispielsweise Gebäckstücken, die auf einem Förderband 3 liegend durch die Überziehmaschine 2 befördert werden. Das Förderband 3 ist als Gitterband 30 ausgebildet und über Führungseinrichtungen 4 und Antriebseinrichtungen, die in den Figuren nur teilweise und schematisch dargestellt sind, gegenüber einem Maschinenrahmen 5 der Überziehmaschine 2 geführt und zum Umlaufen innerhalb des Maschinenrahmens angetrieben. Der Maschinenrahmen 5 weist einen auf dem Boden aufstehendem unteren Teil 6 und einen über Tragsäulen 7 an dem unteren Teil 6 abgestützten oberen Teil 8 auf. An dem oberen Teil 8 des Maschinenrahmens 5 ist als Ausgabeeinrichtung 9 für Süßwarenmasse ein Schleierkasten 10 gelagert, aus dem flüssige Schokolade auf das Förderband 3 hin austritt. Für die ausgegebene Süßwarenmasse, das heißt im konkreten Fall die Schokolade, sind in grundsätzlich bekannter Weise in den Figuren nicht dargestellte Temperatur- und Masseflusseinstelleinrichtungen vorgesehen, die insbesondere die Temperatur der aus dem Schleierkasten 10 austretenden flüssigen Schokolade und deren Massefluss einstellen. Die Temperatur- und Masseflusseinrichtungen werden von einer in Fig. 1 schematisch dargestellten elektronischen Steuerung 11 abhängig von den Vorgaben eines Süßwarenproduktionsprogramms gesteuert. Der Steuerung 11 ist ein Touchscreen 21 zur Bedienung der Vorrichtung 1 zugeordnet, soweit diese durch die Steuerung 11 gesteuert wird. Beispielsweise kann mit Hilfe des Touchscreens 21 das jeweilige Süßwarenproduktionsprogramm ausgewählt werden.

Weiterhin sind an dem Maschinenrahmen 5 verschiedene Produktformungseinrichtungen 12 bis 18 gelagert. Die Produktformungseinrichtungen wirken jeweils auf die von der Ausgabeeinrichtung 9 ausgegebene Süßwarenmasse ein. Bei der Überziehmaschine 2 dienen sie insbesondere dazu, einen Überzug zu kalibrieren, den die aus den Schleierkasten 10 austretende flüssige Schokolade auf den Objekten ausbildet, welche auf dem Förderband 3 liegend durch die Überziehmaschine 2 gefördert werden. Auch die Relativposition der Ausgabeeinrichtung 9 gegenüber dem Förderband 3 wirkt sich auf die Form der ausgegebenen Süßwarenmasse aus. Mit mechanischen Stelleinrichtungen 19 und 20 sind die Höhe der Ausgabeeinrichtung 9 über dem Förderband 3 und die Position der Ausgabeeinrichtung in Laufrichtung des Förderbands 3 einstellbar. Zum Einstellen sind manuell verdrehbare Stellelemente 31 für die Höhe und 39 für die horizontale Position vorgesehen. Die Produktformungseinrichtung 12 ist eine Bodentunkeinrichtung 13 mit einer unterhalb des Gitterbands 30 angeordneten Tunkwalze 22 und einem Schokolade von der Tunkwalze 22 abstreifenden Abstreifer 23. Der Abstand der Tunkwalze 22 zu dem Gitterband 30 ist mit Hilfe einer über ein drehbar an dem Maschinenrahmen 5 gelagertes Stellelement 32 betätigbaren mechanischen Stelleinrichtung einstellbar. Der Abstand des Abstreifers 23 zu der Tunkwalze 22 ist mit Hilfe einer über ein drehbar an dem Maschinenrahmen 5 gelagertes Stellelement 33 betätigbaren mechanischen Stelleinrichtung einstellbar. Bei der Produktformungseinrichtung 14 handelt es sich um eine einen Bodenspalt unter den auf dem Förderband geförderten Objekten definierende Leckwelle 24. Dabei ist der Bodenspalt mit Hilfe einer über ein drehbar an dem Maschinenrahmen 5 gelagertes Stellelement 34 betätigbaren mechanischen Stelleinrichtung einstellbar. Bei der Produktformungseinrichtung 15 handelt es sich um eine überschüssige Schokolade von den auf dem Förderband 3 geförderten Objekten mit Luft abblasenden Abblaseinrichtung 25, deren Höhe über dem Förderband mit Hilfe einer über ein drehbar an dem Maschinenrahmen 5 gelagertes Stellelement 35 betätigbaren mechanischen Stelleinrichtung einstellbar ist. Die Produktformungseinrichtungen 16 und 17 sind Rütteleinrichtungen 26 und 27, um überschüssige Schokolade von den Objekten und dem Gitterband 30 abzurütteln. Mit Hilfe von über drehbar an dem Maschinenrahmen 5 gelagerten Stellelement 36 und 37 betätigbaren mechanischen Stelleinrichtungen ist der auf das Förderband 3 übertragene Hub der Rütteleinrichtungen 26 und 27 einstellbar. Die Produktformungseinrichtung 18 ist eine weitere einen weiteren Bodenspalt unter den auf dem Förderband geförderten Objekten definierende Leckwelle 28. Dabei ist der weitere Bodenspalt mit Hilfe einer über ein drehbar an dem Maschinenrahmen 5 gelagertes Stellelement 38 betätigbaren mechanischen Stelleinrichtung einstellbar. Den Stellelementen 31 bis 39 ist jeweils sowohl ein an dem Maschinenrahmen 5 gelagerter, aber in den Figuren nicht separat dargestellter Stellungssensor als auch eine Anzeigeeinrichtung 41 bis 49 zugeordnet. Die Stellungssensoren sind ebenso wie die Anzeigeeinrichtungen 41 bis 49 an die Steuerung 11 angeschlossen. Die Stellungssensoren erfassen jeweils eine Stellung, die die Drehstellung des zugeordneten Stellelements 31 bis 39 oder eine aus dieser Drehstellung resultierende räumliche Anordnung der Ausgabeeinrichtung 9 beziehungsweise der jeweiligen Produktformungseinrichtung 12 bis 18 ist. Die Steuerung 11 vergleicht die jeweilige erfasste Stellung mit einer Stellungsvorgabe aus dem Süßwarenproduktionsprogramm und steuert die zugeordnete Anzeigeeinrichtung 41 bis 49 abhängig von dem Ergebnis dieses Vergleichs an. Die Ansteuerung erfolgt derart, dass mittels der Anzeigeeinrichtung angezeigt wird, ob und gegebenenfalls wie die erfasste Stellung nach Richtung und Betrag von der jeweiligen Stellungsvorgabe abweicht. Dazu weist jede Anzeigeeinrichtung 41 bis 44 mehrere um die Drehachse des zugeordneten Stellelements 31 bis 39 herum angeordnete Leuchtmittel auf, die von der Steuerung 11 in Pulsen unterschiedlicher Frequenz angesteuert werden, insbesondere zur Ausbildung eines Lauflichts unterschiedlicher Laufrichtung und Geschwindigkeit. Die Anzeigeeinrichtungen 41 bis 49 können also dazu genutzt werden, die Ausgabeeinrichtung 9 und die Produktformungseinrichtungen 12 bis 18 schnell auf die Stellungsvorgaben aus den Süßwarenproduktionsprogramm einzustellen. Die Anzeigeeinrichtungen 41 bis 49 können auch genutzt werden, schnell visuell zu überprüfen, in wieweit die Einstellungen der Ausgabeeinrichtung 9 und der Produktformungseinrichtungen 12 bis 18 diesen Stellungsvorgaben weiterhin entsprechen, wenn eine Feineinstellung anhand einer visuellen Kontrolle der erreichten Produktqualität erfolgt ist. Wenn eine oder mehrere der Anzeigeeinrichtungen 41 bis 49 ein Abweichen von der jeweiligen Stellungsvorgabe anzeigt, aber eine sehr gute Produktqualität erzielt wird, insbesondere sogar eine bessere Produktqualität als beim Einhalten der Stellungsvorgabe, kann die jeweilige aktuell erfasste Stellung als neue Stellungsvorgabe in das Süßwarenproduktionsprogramm übernommen werden. Dies kann durch eine entsprechende Befehlseingabe über den Touchscreen 21 veranlasst werden. Etwaige Abweichungen der tatsächlichen Stellungen von den Stellungsvorgaben können zusätzlich auf dem Touchscreen 21 angezeigt werden. Weiterhin können bei der Vorrichtung 1 einzelne der Stellelemente 31 bis 39 mit elektromotorischen Antrieben kombiniert sein. Mindestens eine, typischerweise die meisten oder auch alle der Produktformungseinrichtungen 12 bis 18 sind jedoch nicht motorisch, sondern nur manuell einstellbar.

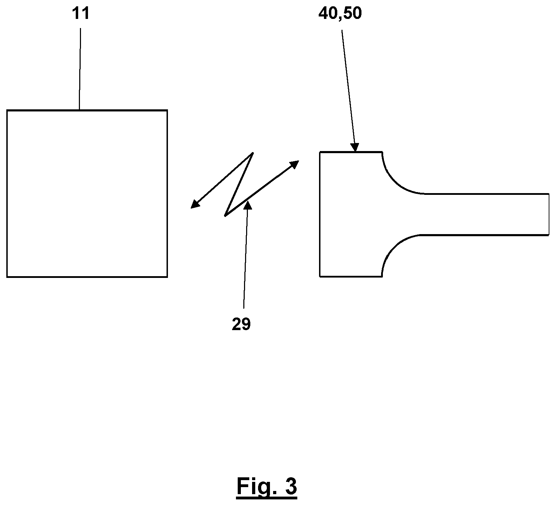

**Fig. 3** illustriert schematisch eine weitere Ausführungsform der erfindungsgemäßen Vorrichtung, bei der eine Displayeinrichtung 40, hier in Form einer Augmented Reality-Brille 50, über eine drahtlose Kommunikationsverbindung 29 an die Steuerung 11 angeschlossen ist. Die Steuerung 11 steuert die Displayeinrichtung derart an, dass beim Betrachten der Überziehmaschine 2 gemäß den Fig. 1 und 2 im Bereich der Stellelemente 31 und 39 virtuelle Anzeigen eingeblendet werden, die wie die angesteuerten Anzeigeeinrichtungen 41 bis 49 aussehen, ohne dass aber die Anzeigeeinrichtung 41 bis 49 bei der weiteren Ausführungsform der erfindungsgemäßen Vorrichtung real vorhanden sind.

### BEZUGSZEICHENLISTE

- 1: Vorrichtung
- 2: Überziehmaschine
- 3: Förderband
- 4: Führungseinrichtung
- 5: Maschinenrahmen
- 6: unterer Teil des Maschinenrahmens
- 7: Tragsäule
- 8: oberer Teil des Maschinenrahmens
- 9: Ausgabeeinrichtung
- 10: Schleierkasten
- 11: Steuerung
- 12: Produktformungseinrichtung
- 13: Bodentunkeinrichtung
- 14: Produktformungseinrichtung
- 15: Produktformungseinrichtung
- 16: Produktformungseinrichtung
- 17: Produktformungseinrichtung
- 18: Produktformungseinrichtung
- 19: Stelleinrichtung
- 20: Stelleinrichtung
- 21: Touchscreen
- 22: Tunkwalze
- 23: Abstreifer
- 24: Leckwelle
- 25: Abblaseinrichtung
- 26: Rütteleinrichtung
- 27: Rütteleinrichtung
- 28: weitere Leckwelle
- 29: drahtlose Kommunikationsverbindung
- 30: Gitterband
- 31: Stellelement
- 32: Stellelement
- 33: Stellelement
- 34: Stellelement
- 35: Stellelement
- 36: Stellelement
- 37: Stellelement
- 38: Stellelement
- 39: Stellelement
- 40: Displayeinrichtung
- 41: Anzeigeeinrichtung
- 42: Anzeigeeinrichtung
- 43: Anzeigeeinrichtung
- 44: Anzeigeeinrichtung
- 45: Anzeigeeinrichtung
- 46: Anzeigeeinrichtung
- 47: Anzeigeeinrichtung
- 48: Anzeigeeinrichtung
- 49: Anzeigeeinrichtung
- 50: Augmented Reality-Brille

## Patentansprüche

1. Vorrichtung (1) zum Ausgeben einer erwärmten Süßwarenmasse mit
- einem Maschinenrahmen (5),
- einem Förderband (3),
- an dem Maschinenrahmen (5) gelagerten Führungseinrichtungen (4) und Antriebseinrichtungen für das Förderband (3),
- einer an dem Maschinenrahmen (5) gelagerten Ausgabeeinrichtung (9), die die Süßwarenmasse in Richtung auf das Förderband (3) ausgibt,
- Temperatur- und Masseflusseinstelleinrichtungen für die Süßwarenmasse, die von der Ausgabeeinrichtung (9) ausgegeben wird,
- einer elektronischen Steuerung (11), die dazu ausgebildet ist, die Antriebs-, die Temperatur- und die Masseflusseinstelleinrichtungen (4) abhängig von Vorgaben eines Süßwarenproduktionsprogramms zu steuern,
- einer an dem Maschinenrahmen (5) gelagerten ersten Produktformungseinrichtung (12-18), die dazu ausgebildet und angeordnet ist, auf die von der Ausgabeeinrichtung (9) ausgegebene Süßwarenmasse einzuwirken, und
- einer an dem Maschinenrahmen (5) gelagerten ersten mechanischen Stelleinrichtung mit einem gegenüber dem Maschinenrahmen (5) um eine erste Drehachse manuell verdrehbaren ersten Stellelement (32-38), die dazu ausgebildet ist, eine erste räumliche Anordnung der ersten Produktformungseinrichtung (12-18) gegenüber den Führungseinrichtungen (4) einzustellen, **dadurch gekennzeichnet,**
- **dass** ein an dem Maschinenrahmen (5) gelagerter erster Stellungssensor an die Steuerung (11) angeschlossen und dazu angeordnet und ausgebildet ist, eine erste Stellung zu erfassen, die eine erste Drehstellung des ersten Stellelements (32-38) gegenüber dem Maschinenrahmen (5) oder die daraus resultierende erste räumliche Anordnung der ersten Produktformungseinrichtung (12-18) ist,
- **dass** die Steuerung (11) dazu ausgebildet ist, die erste Stellung mit einer ersten Stellungsvorgabe aus dem Süßwarenproduktionsprogramm zu vergleichen,
- **dass** eine erste Anzeigeeinrichtung (42-48), die in dem ersten Stellelement (32-38) und/oder dem ersten Stellelement (32-38) benachbart an dem Maschinenrahmen (5) angeordnet ist, an die Steuerung (11) angeschlossen ist, und
- **dass** die Steuerung (11) und die erste Anzeigeeinrichtung (42-48) dazu ausgebildet sind, anzuzeigen, ob die erste Stellung mit der ersten Stellungsvorgabe übereinstimmt oder davon abweicht.

2. Vorrichtung (1) nach Anspruch 1, **dadurch gekennzeichnet, dass** die Steuerung (11) und die erste Anzeigeeinrichtung (42-48) dazu ausgebildet sind, anzuzeigen, wie die erste Stellung nach Richtung und/oder Betrag von der ersten Stellungsvorgabe abweicht.

3. Vorrichtung (1) nach Anspruch 1 oder 2, **dadurch gekennzeichnet, dass** die erste Anzeigeeinrichtung (42-48) mehrere um die erste Drehachse herum angeordnete erste Leuchtmittel aufweist.

4. Vorrichtung (1) nach Anspruch 3, **dadurch gekennzeichnet, dass** die Steuerung (11) die mehreren ersten Leuchtmittel in Pulsen
- unterschiedlicher Frequenz und/oder
- zur Ausbildung eines Lauflichts unterschiedlicher Laufrichtung und/oder Geschwindigkeit und/oder
- zur Ausgabe eines Abschlusssignals für eine erfolgreiche Einstellung entsprechend der ersten Stellungsvorgabe
ansteuert.

5. Vorrichtung (1) nach einem der vorhergehenden Ansprüche, **dadurch gekennzeichnet,**
- **dass** mindestens eine an dem Maschinenrahmen (5) gelagerte weitere mechanische Stelleinrichtung mit einem gegenüber dem Maschinenrahmen (5) um eine weitere Drehachse manuell verdrehbaren weiteren Stellelement (32-38) zum Einstellen einer weiteren räumlichen Anordnung einer an dem Maschinenrahmen (5) gelagerten weiteren Produktformungseinrichtung (12-18) gegenüber den Führungseinrichtungen (4) vorgesehen ist,
- **dass** mindestens ein an dem Maschinenrahmen (5) gelagerter weiterer Stellungssensor an die Steuerung (11) angeschlossen und dazu angeordnet und ausgebildet ist, eine weitere Stellung zu erfassen, die eine weitere Drehstellung des weiteren Stellelements (32-38) gegenüber dem Maschinenrahmen (5) oder die daraus resultierende weitere räumliche Anordnung der weiteren Produktformungseinrichtung (12-18) ist,
- **dass** die Steuerung (11) dazu ausgebildet ist, die weitere Stellung mit einer weiteren Stellungsvorgabe aus dem Süßwarenproduktionsprogramm zu vergleichen, und
- **dass** eine weitere Anzeigeeinrichtung (42-48), die in dem weiteren Stellelement (32-38) und/oder dem weiteren Stellelement (32-38) benachbart an dem Maschinenrahmen (5) angeordnet ist, an die Steuerung (11) angeschlossen ist, um anzuzeigen, ob die weitere Stellung mit der weiteren Stellungsvorgabe übereinstimmt oder davon abweicht.

6. Vorrichtung (1) nach Anspruch 5, **dadurch gekennzeichnet,**
- **dass** die Steuerung (11) und die weitere Anzeigeeinrichtung (42-48) dazu ausgebildet sind, anzuzeigen, wie die weitere Drehstellung nach Richtung und/oder Betrag von der weiteren Drehstellungsvorgabe abweicht, und/oder
- **dass** die weitere Anzeigeeinrichtung (42-48) mehrere um die erste Drehachse herum angeordnete weitere Leuchtmittel aufweist, wobei die Steuerung (11) die weiteren Leuchtmittel optional in Pulsen ansteuert.

7. Vorrichtung (1) zum Ausgeben einer erwärmten Süßwarenmasse mit
- einem Maschinenrahmen (5),
- einem Förderband (3),
- an dem Maschinenrahmen (5) gelagerten Führungseinrichtungen (4) und Antriebseinrichtungen für das Förderband (3),
- einer an dem Maschinenrahmen (5) gelagerten Ausgabeeinrichtung (9), die die Süßwarenmasse in Richtung auf das Förderband (3) ausgibt,
- Temperatur- und Masseflusseinstelleinrichtungen für die Süßwarenmasse, die die Ausgabeeinrichtung (9) ausgibt,
- einer elektronischen Steuerung (11), die dazu ausgebildet ist, die Antriebs-, die Temperatur- und die Masseflusseinstelleinrichtungen abhängig von Vorgaben eines Süßwarenproduktionsprogramms zu steuern,
- einer an dem Maschinenrahmen (5) gelagerten ersten Produktformungseinrichtung (12-18), die dazu ausgebildet ist, auf die von der Ausgabeeinrichtung (9) ausgegebene Süßwarenmasse einzuwirken, und
- einer an dem Maschinenrahmen (5) gelagerten ersten mechanischen Stelleinrichtung mit einem gegenüber dem Maschinenrahmen (5) um eine erste Drehachse manuell verdrehbaren ersten Stellelement (32-38), die dazu ausgebildet ist, eine erste räumliche Anordnung der ersten Produktformungseinrichtung (12-18) gegenüber den Führungseinrichtungen (4) einzustellen, **dadurch gekennzeichnet,**
- **dass** ein an dem Maschinenrahmen (5) gelagerter erster Stellungssensor an die Steuerung (11) angeschlossen und dazu angeordnet und ausgebildet ist, eine erste Stellung zu erfassen, die eine erste Drehstellung des ersten Stellelements (32-38) gegenüber dem Maschinenrahmen (5) oder die daraus resultierende erste räumliche Anordnung der ersten Produktformungseinrichtung (12-18) ist,
- **dass** die Steuerung (11) dazu ausgebildet ist, die erste Stellung mit einer ersten Stellungsvorgabe aus dem Süßwarenproduktionsprogramm zu vergleichen,
- **dass** eine Displayeinrichtung an die Steuerung (11) angeschlossen ist und
- **dass** die Steuerung (11) und die Displayeinrichtung (40) dazu ausgebildet sind, eine virtuelle erste Anzeige in eine Ansicht oder ein Bild der Vorrichtung (1) vor und/oder neben dem ersten Stellelement (32-38) einzublenden und mittels der virtuellen ersten Anzeige anzuzeigen, ob die erste Stellung mit der ersten Stellungsvorgabe übereinstimmt oder davon abweicht.

8. Vorrichtung (1) nach Anspruch 7, **dadurch gekennzeichnet, dass** die Steuerung (11) und die Displayeinrichtung (40) dazu ausgebildet sind, mittels der virtuellen ersten Anzeige anzuzeigen, wie die erste Stellung nach Richtung und/oder Betrag von der ersten Stellungsvorgabe abweicht.

9. Vorrichtung (1) nach Anspruch 7 oder 8, **dadurch gekennzeichnet,**
- **dass** mindestens eine an dem Maschinenrahmen (5) gelagerte weitere mechanische Stelleinrichtung mit einem gegenüber dem Maschinenrahmen (5) um eine weitere Drehachse manuell verdrehbaren weiteren Stellelement (32-38) zum Einstellen einer weiteren räumlichen Anordnung einer an dem Maschinenrahmen (5) gelagerten weiteren Produktformungseinrichtung (12-18) gegenüber den Führungseinrichtungen (4) vorgesehen ist,
- **dass** mindestens ein an dem Maschinenrahmen (5) gelagerter weiterer Stellungssensor an die Steuerung (11) angeschlossen und dazu angeordnet und ausgebildet ist, eine weitere Stellung zu erfassen, die eine weitere Drehstellung des weiteren Stellelements (32-38) gegenüber dem Maschinenrahmen (5) oder die daraus resultierende weitere räumliche Anordnung der weiteren Produktformungseinrichtung (12-18) ist,
- **dass** die Steuerung (11) dazu ausgebildet ist, die weitere Stellung mit einer weiteren Stellungsvorgabe aus dem Süßwarenproduktionsprogramm zu vergleichen, und
- **dass** die Steuerung (11) und die Displayeinrichtung (40) dazu ausgebildet sind, eine virtuelle weitere Anzeige in die Ansicht oder das Bild der Vorrichtung (1) vor und/oder neben dem weiteren Stellelement (32-38) einzublenden und mittels der virtuellen weiteren Anzeige anzuzeigen, ob die weitere Stellung mit der weiteren Stellungsvorgabe übereinstimmt oder davon abweicht.

10. Vorrichtung (1) nach Anspruch 9, **dadurch gekennzeichnet, dass** die Steuerung (11) und die Displayeinrichtung (40) dazu ausgebildet sind, mittels der virtuellen weiteren Anzeige anzuzeigen, wie die weitere Drehstellung nach Richtung und/oder Betrag von der weiteren Drehstellungsvorgabe abweicht.

11. Vorrichtung (1) nach einem der vorhergehenden Ansprüche, **dadurch gekennzeichnet, dass** der erste Stellungssensor außerhalb eines Süßwarenmassekontaktbereichs angeordnet und über eine drahtgebundene oder drahtlose Signalübertragungsstrecke an die Steuerung (11) angeschlossen ist, wobei der erste Stellungssensor optional in das erste Stellelement (32-38) integriert ist oder die erste räumliche Anordnung der ersten Produktformungseinrichtung (12-18) kontaktlos erfasst.

12. Vorrichtung (1) nach einem der vorhergehenden Ansprüche, **dadurch gekennzeichnet, dass** die Steuerung (11) dazu ausgebildet ist, einen Betrieb der Vorrichtung (1) in Bezug auf eingestellte und/oder erfasste Betriebsparameter zu dokumentieren, wobei die erste Stellung als erfasster Betriebsparameter dokumentiert wird.

13. Vorrichtung (1) nach einem der vorhergehenden Ansprüche, **dadurch gekennzeichnet, dass** die Steuerung (11) dazu ausgebildet ist, auf eine Bedienereingabe hin die aktuelle erste Stellung als neue erste Stellungsvorgabe in das Süßwarenproduktionsprogramm zu übernehmen.

14. Vorrichtung (1) nach einem der vorhergehenden Ansprüche, **dadurch gekennzeichnet,**
- **dass** die Ausgabeeinrichtung (9) einen Schleierkasten (10) zum Ausgeben flüssiger Süßwarenmasse zum Überziehen von auf dem Förderband (3) geförderten Objekten mit der Süßwarenmasse aufweist,
- wobei die erste Produktformungseinrichtung (12-18) dazu ausgebildet ist, Überzüge der Objekte mit der Süßwarenmasse zu kalibrieren.

15. Vorrichtung (1) nach einem der vorhergehenden Ansprüche, **dadurch gekennzeichnet,**
**dass** die erste Produktformungseinrichtung (12-18)
- eine Bodentunkeinrichtung mit einer gegenläufigen, einen Bodenwall unter den auf dem Förderband (3) geförderten Objekten definierenden Tunkwalze (22) oder
- eine einen Bodenspalt unter den auf dem Förderband (3) geförderten Objekten definierende Leckwelle (24) oder
- eine überschüssige Süßwarenmasse von den auf dem Förderband (3) geförderten Objekten mit Luft abblasende Abblaseinrichtung (25) oder
- eine überschüssige Süßwarenmasse von den auf dem Förderband (3) geförderten Objekten abrüttelnde mechanische Rütteleinrichtung (23) oder
- eine von den auf dem Förderband (3) geförderten Objekten mitgenommene überschüssige Süßwarenmasse entfernende Entschwänzereinrichtung (28) ist.

## Claims

1. Apparatus (1) for dispensing a heated confectionery mass, the apparatus (1) comprising
- a machine frame (5),
- a conveyor belt (3),
- guiding devices (4) and driving devices for the conveyor belt (3) mounted to the machine frame (5),
- a dispensing device (9) mounted to the machine frame (5), which dispenses the confectionery mass in direction towards the conveyor belt (3),
- temperature and mass flow adjusting devices for the confectionery mass dispensed by the dispensing device (9),
- an electronic controller (11) configured to control the driving, the temperature and the mass flow adjusting devices (4) in accordance with the specifications of a confectionery production program,
- a first product forming device (12-18) mounted to the machine frame (5), which is configured and arranged to act on the confectionery mass dispensed by the dispensing device (9), and
- a first mechanical setting device mounted to the machine frame (5) and having a first setting element (32-38) which can be rotated manually relative to the machine frame (5) about a first axis of rotation and which is configured to set a first spatial arrangement of the first product forming device (12-18) relative to the guiding devices (4),
**characterized in**
- **that** a first position sensor mounted to the machine frame (5) is connected to the controller (11) and is arranged and configured to detect a first position, which is a first rotational position of the first setting element (32-38) relative to the machine frame (5) or the resulting first spatial arrangement of the first product forming device (12-18),
- **that** the controller (11) is configured to compare the first position with a first position specification from the confectionery production program,
- **that** a first indicator (42-48), which is arranged in the first setting element (32-38) and/or adjacent to the first setting element (32-38) on the machine frame (5), is connected to the controller (11), and
- **that** the controller (11) and the first indicator (42-48) are configured to indicate whether the first position corresponds to or deviates from the first position specification.

2. Apparatus (1) according to claim 1, **characterized in that** the controller (11) and the first indicator (42-48) are configured to indicate how the first position deviates in terms of direction and/or amount from the first position specification.

3. Apparatus (1) according to claim 1 or 2, **characterized in that** the first indicator (42-48) comprises a plurality of first illuminants arranged around the first axis of rotation.

4. Apparatus (1) according to claim 3, **characterized in that** the controller (11) operates the plurality of first illuminants in pulses.
- of different frequencies and/or
- to form a running light of different running directions and/or speeds, and/or
- to output a final signal for a successful setting according to the first position specification.

5. Apparatus (1) according to any one of the preceding claims, **characterized in**
- **that** at least one further mechanical setting device mounted to the machine frame (5) is provided with a further setting element (32-38), which can be manually rotated about a further axis of rotation relative to the machine frame (5), for setting a further spatial arrangement of a further product forming device (12-18) mounted to the machine frame (5) relative to the guiding devices (4),
- **that** at least one further position sensor mounted to the machine frame (5) is connected to the controller (11) and is arranged and configured to detect a further position, which is a further rotational position of the further setting element (32-38) relative to the machine frame (5) or the resulting further spatial arrangement of the further product forming device (12-18),
- **that** the controller (11) is configured to compare the further position with a further position specification from the confectionery production program, and
- **that** a further indicator (42-48), which is arranged in the further setting element (32-38) and/or adjacent to the further setting element (32-38) on the machine frame (5), is connected to the controller (11) in order to indicate whether the further position corresponds to or deviates from the further position specification.

6. The apparatus (1) according to claim 5, **characterized in**
- **that** the controller (11) and the further indicator (42-48) are configured to indicate how the further rotational position deviates in terms of direction and/or amount from the further rotational position specification, and/or
- **that** the further indicator (42-48) comprises a plurality of further illuminants arranged around the first axis of rotation, wherein the controller (11) optionally operates the further illuminants in pulses.

7. Apparatus (1) for dispensing a heated confectionery mass, the apparatus (1) comprising
- a machine frame (5),
- a conveyor belt (3),
- guiding devices (4) and driving devices for the conveyor belt (3) mounted to the machine frame (5),
- a dispensing device (9) mounted to the machine frame (5), which outputs the confectionery mass in direction towards the conveyor belt (3),
- temperature and mass flow adjusting devices for the confectionery mass dispensed by the dispensing device (9),
- an electronic controller (11) configured to control the driving, temperature and mass flow adjusting devices in accordance with the specifications of a confectionery production program,
- a first product forming device (12-18) mounted to the machine frame (5) and configured to act on the confectionery mass output by the dispensing device (9), and
- a first mechanical setting device mounted to the machine frame (5) and having a first setting element (32-38) which can be rotated manually relative to the machine frame (5) about a first axis of rotation and which is configured to set a first spatial arrangement of the first product forming device (12-18) relative to the guiding devices (4),
**characterized in**
- **that** a first position sensor mounted to the machine frame (5) is connected to the controller (11) and is arranged and configured to detect a first position, which is a first rotational position of the first setting element (32-38) relative to the machine frame (5) or the resulting first spatial arrangement of the first product forming device (12-18),
- **that** the controller (11) is configured to compare the first position with a first position specification from the confectionery production program,
- **that** a display is connected to the controller (11) and
- **that** the controller (11) and the display (40) are configured to superimpose a first virtual display in a view or an image of the apparatus (1) in front of and/or next to the first setting element (32-38) and to indicate by means of the first virtual display whether the first position corresponds to the first position specification or deviates therefrom.

8. Apparatus (1) according to claim 7, **characterized in that** the controller (11) and the display (40) are configured to indicate, by means of the virtual first display, how the first position deviates from the first position specification in terms of direction and/or amount.

9. The apparatus (1) according to claim 7 or 8, **characterized in that,**
- that at least one further mechanical setting device mounted to the machine frame (5) is provided with a further setting element (32-38), which can be manually rotated about a further axis of rotation relative to the machine frame (5), for setting a further spatial arrangement of a further product forming device (12-18) mounted to the machine frame (5) relative to the guiding devices (4),
- that at least one further position sensor mounted to the machine frame (5) is connected to the controller (11) and is arranged and configured to detect a further position, which is a further rotational position of the further setting element (32-38) relative to the machine frame (5) or the resulting further spatial arrangement of the further product forming device (12-18),
- that the controller (11) is configured to compare the further position with a further position specification from the confectionery production program, and
- that the controller (11) and the display (40) are configured to display a further virtual display in the view or image of the apparatus (1) in front of and/or next to the further setting element (32-38) and to indicate by means of the further virtual display whether the further position corresponds to the further position specification or deviates therefrom.

10. Apparatus (1) according to claim 9, **characterized in that** the controller (11) and the display (40) are configured to indicate, by means of the further virtual display, how the further rotational position deviates from the further rotational position specification in terms of direction and/or amount.

11. Apparatus (1) according to one of the preceding claims, **characterized in that** the first position sensor is arranged outside a confectionery mass contact area and is connected to the controller (11) via a wired or wireless signal transmission path, wherein the first position sensor is optionally integrated into the first setting element (32-38) or detects the first spatial arrangement of the first product forming device (12-18) without contact.

12. Apparatus (1) according to one of the preceding claims, **characterized in that** the controller (11) is configured to document an operation of the apparatus (1) with respect to set and/or detected operating parameters, wherein the first position is documented as a detected operating parameter.

13. Apparatus (1) according to one of the preceding claims, **characterized in that** the controller (11) is configured to adopt the current first position as a new first position specification in the confectionery production program in response to an operator input.

14. The apparatus (1) according to any one of the preceding claims, **characterized in that,**
- **in that** the dispensing device (9) comprises a curtain forming device (10) for dispensing liquid confectionery mass for coating objects conveyed on the conveyor belt (3) with the confectionery mass,
- wherein the first product forming device (12-18) is configured to calibrate coatings of the objects with the confectionery mass.

15. Apparatus (1) according to one of the preceding claims, **characterized in in that** the first product forming device (12-18) is
- a bottom dipping device with a counter-rotating dipping roller (22) defining a bottom wall under the objects conveyed on the conveyor belt (3), or
- a licking shaft (24) defining a bottom gap under the objects conveyed on the conveyor belt (3), or
- a blow-off device (25) blowing off excess confectionery mass from the objects conveyed on the conveyor belt (3) with air, or
- a mechanical shaking device (23) shaking off excess confectionery mass from the objects conveyed on the conveyor belt (3), or
- a tails removing device (28) removing excess confectionery mass taken along by the objects conveyed on the conveyor belt (3).

## Revendications

1. Dispositif (1) pour la distribution d'une masse de confiserie chauffée avec
- un bâti de machine (5),
- une bande transporteuse (3),
- des dispositifs de guidage (4) logés au niveau du bâti de machine (5) et des dispositifs d'entraînement pour la bande transporteuse (3),
- un dispositif de distribution (9) logé au niveau du bâti de machine (5), qui distribue la masse de confiserie en direction de la bande transporteuse (3),
- des dispositifs de réglage de la température et du débit massique pour la masse de confiserie qui est distribuée par le dispositif de distribution (9),
- une commande électronique (11) qui est conçue pour contrôler les dispositifs d'entraînement et de réglage de la température et du débit massique (4) en fonction d'instructions d'un programme de production de confiseries,
- un premier dispositif de formage de produit (12-18) logé au niveau du bâti de machine (5), qui est conçu et disposé de façon à agir sur la masse de confiserie distribuée par le dispositif de distribution (9) et
- un premier dispositif de réglage mécanique logé au niveau du bâti de machine (5), avec un premier élément de réglage (32-38) pouvant être mis en rotation manuellement par rapport au bâti de machine (5) autour d'un premier axe de rotation, qui est conçu pour régler une première disposition spatiale du premier dispositif de formage de produit (12-18) par rapport aux dispositifs de guidage (4),
**caractérisé en ce que**
- un premier capteur de position logé au niveau du bâti de machine (5) est relié à la commande (11) et est disposé et conçu de façon à mesurer une première position, qui est une première position de rotation du premier élément de réglage (32-38) par rapport au bâti de machine (5) ou la première disposition spatiale, qui en résulte, du premier dispositif de formage de produit (12-18),
- la commande (11) est conçue pour comparer la première position avec une première consigne de position provenant du programme de production de confiseries,
- un premier dispositif d'affichage (42-48), qui est disposé dans le premier élément de réglage (32-38) et/ou près du premier élément de réglage (32-38) au niveau du bâti de machine (5), est raccordé à la commande (11) et
- la commande (11) et le premier dispositif d'affichage (42-48) sont conçus de façon à afficher si la première position coïncide ou non avec la première consigne de position.

2. Dispositif (1) selon la revendication 1, **caractérisé en ce que** la commande (11) et le premier dispositif d'affichage (42-48) sont conçus pour afficher comment la première position diffère, en ce qui concerne la direction et/ou la valeur, de la première consigne de position.

3. Dispositif (1) selon la revendication 1 ou 2, **caractérisé en ce que** le premier dispositif d'affichage (42-48) comprend plusieurs premiers moyens d'éclairage disposés autour du premier axe de rotation.

4. Dispositif (1) selon la revendication 3, **caractérisé en ce que** la commande (11) contrôle les plusieurs premiers moyens d'éclairage par impulsions
- de fréquences différentes et/ou
- pour la formation de lumières défilantes de directions de défilement et/ou de vitesses différentes et/ou
- pour l'émission d'un signal de terminaison pour un réglage réussi en fonction de la première consigne de position.

5. Dispositif (1) selon l'une des revendications précédentes, **caractérisé en ce que**
- au moins un autre dispositif de réglage mécanique, logé au niveau du bâti de machine (5), avec un autre élément de réglage (32-38) pouvant être mis en rotation manuellement par rapport au bâti de machine (5) autour d'un autre axe de rotation, pour le réglage d'une autre disposition spatiale d'un autre dispositif de formage de produit (12-18) logé au niveau du bâti de machine (5) par rapport aux dispositifs de guidage (4), est prévu,
- au moins un autre capteur de position logé au niveau du bâti de machine (5) est raccordé à la commande (11) et est disposé et conçu pour mesurer une autre position, qui est une autre position de rotation de l'autre élément de réglage (32-38) par rapport au bâti de machine (5) ou l'autre disposition spatiale, qui en résulte, de l'autre dispositif de formage de produit (12-18),
- la commande (11) est conçue pour comparer l'autre position avec une autre consigne de position provenant du programme de production de confiseries et
- un autre dispositif d'affichage (42-48) qui est disposé dans l'autre élément de réglage (32-38) et/ou près de l'autre élément de réglage (32-38) au niveau du bâti de machine (5), est raccordé à la commande (11), afin d'afficher si l'autre position coïncide ou non avec l'autre consigne de position.

6. Dispositif (1) selon la revendication 5, **caractérisé en ce que**
- la commande (11) et l'autre dispositif d'affichage (42-48) sont conçus pour afficher comment l'autre position de rotation diffère, en ce qui concerne la direction et/ou la valeur, de l'autre consigne de position et/ou
- l'autre dispositif d'affichage (42-48) comprend plusieurs autres moyens d'éclairage disposés autour du premier axe de rotation, dans lequel la commande (11) contrôle les autres moyens d'éclairage optionnellement à l'aide d'impulsions.

7. Dispositif (1) pour la distribution d'une masse de confiserie chauffée avec
- un bâti de machine (5),
- une bande transporteuse (3),
- des dispositifs de guidage (4) logés au niveau du bâti de machine (5) et des dispositifs d'entraînement pour la bande transporteuse (3),
- un dispositif de distribution (9) logé au niveau du bâti de machine (5), qui distribue la masse de confiserie en direction de la bande transporteuse (3),
- des dispositifs de réglage de la température et du débit massique pour la masse de confiserie qui est distribuée par le dispositif de distribution (9),
- une commande électronique (11) qui est conçue pour contrôler les dispositifs d'entraînement et de réglage de la température et du débit massique en fonction d'instructions d'un programme de production de confiseries,
- un premier dispositif de formage de produit (12-18) logé au niveau du bâti de machine (5), qui est conçu et disposé de façon à agir sur la masse de confiserie distribuée par le dispositif de distribution (9) et
- un premier dispositif de réglage mécanique logé au niveau du bâti de machine (5), avec un premier élément de réglage (32-38) pouvant être mis en rotation manuellement par rapport au bâti de machine (5) autour d'un premier axe de rotation, qui est conçu pour régler une première disposition spatiale du premier dispositif de formage de produit (12-18) par rapport aux dispositifs de guidage (4),
**caractérisé en ce que**
- un premier capteur de position logé au niveau du bâti de machine (5) est relié à la commande (11) et est disposé et conçu de façon à mesurer une première position, qui est une première position de rotation du premier élément de réglage (32-38) par rapport au bâti de machine (5) ou la première disposition spatiale, qui en résulte, du premier dispositif de formage de produit (12-18),
- la commande (11) est conçue pour comparer la première position avec une première consigne de position provenant du programme de production de confiseries,
- un dispositif d'affichage est raccordé à la commande (11) et
- la commande (11) et le dispositif d'affichage (40) sont conçus pour représenter un premier affichage virtuel dans une vue ou une image du dispositif (1) devant et/ou à côté du premier élément de réglage (32-38) et pour afficher, au moyen du premier affichage virtuel, si la première position coïncide ou non avec la première consigne de position.

8. Dispositif (1) selon la revendication 7, **caractérisé en ce que** la commande (11) et le dispositif d'affichage (40) sont conçus pour afficher, au moyen de premier affichage virtuel, comment la première position diffère, en ce qui concerne la direction et/ou la valeur, de la première consigne de position.

9. Dispositif (1) selon la revendication 7 ou 8, **caractérisé en ce que**,
- au moins un autre dispositif de réglage mécanique, logé au niveau du bâti de machine (5), avec un autre élément de réglage (32-38) pouvant être mis en rotation manuellement par rapport au bâti de machine (5) autour d'un autre axe de rotation, pour le réglage d'une autre disposition spatiale d'un autre dispositif de formage de produit (12-18) logé au niveau du bâti de machine (5) par rapport aux dispositifs de guidage (4), est prévu,
- au moins un autre capteur de position logé au niveau du bâti de machine (5) est raccordé à la commande (11) et est disposé et conçu pour mesurer une autre position, qui est une autre position de rotation de l'autre élément de réglage (32-38) par rapport au bâti de machine (5) ou l'autre disposition spatiale, qui en résulte, de l'autre dispositif de formage de produit (12-18),
- la commande (11) est conçue pour comparer l'autre position avec une autre consigne de position provenant du programme de production de confiseries et
- la commande (11) et le dispositif d'affichage (40) sont conçus pour représenter un autre affichage virtuel dans une vue ou une image du dispositif (1) devant et/ou à côté de l'autre élément de réglage (32-38) et pour afficher, au moyen de l'autre affichage virtuel, si l'autre position coïncide ou non avec l'autre consigne de position.

10. Dispositif (1) selon la revendication 9, **caractérisé en ce que** la commande (11) et le dispositif d'affichage (40) sont conçus pour afficher, au moyen de l'autre affichage virtuel, comment l'autre position de rotation diffère, en ce qui concerne la direction et/ou la valeur, de l'autre consigne de position de rotation.

11. Dispositif (1) selon l'une des revendications précédentes, **caractérisé en ce que** le premier capteur de position est disposé à l'extérieur d'une zone de contact de masse de confiserie et est raccordé, par l'intermédiaire d'un circuit de transmission de signaux filaire ou sans fil, à la commande (11), dans lequel le premier capteur de position est optionnellement intégré dans le premier élément de réglage (32-38) ou mesure sans contact la première disposition spatiale du premier dispositif de formage de produit (12-18).

12. Dispositif (1) selon l'une des revendications précédentes, **caractérisé en ce que** la commande (11) est conçue pour documenter un fonctionnement du dispositif (1) sur la base de paramètres de fonctionnement réglés et/ou mesurés, dans lequel la première position est documentée comme un paramètre de fonctionnement mesuré.

13. Dispositif (1) selon l'une des revendications précédentes, **caractérisé en ce que** la commande (11) est conçue pour prendre en compte, lors d'une entrée d'opérateur, la première position actuelle en tant que nouvelle consigne de position dans le programme de production de confiseries.

14. Dispositif (1) selon l'une des revendications précédentes, **caractérisé en ce que**
- le dispositif de distribution (9) comprend une boîte à voile (10) pour la distribution d'une masse de confiserie liquide, pour l'enrobage d'objets transportés sur la bande transporteuse (3) avec la masse de confiserie,
- dans lequel le premier dispositif de formage de produit (12-18) est conçu pour calibrer les enrobages des objets avec la masse de confiserie.

15. Dispositif (1) selon l'une des revendications précédentes, **caractérisé en ce que** le premier dispositif de formage de produit (12-18) est
- un dispositif de trempage de fond avec un rouleau de trempage (22) opposé définissant une paroi de fond sous l'objet transporté sur la bande transporteuse (3) ou
- un arbre de fuite (24) définissant un interstice de fond sous l'objet transporté sur la bande transporteuse (3) ou
- un dispositif de soufflage (25) soufflant avec de l'air une masse de confiserie en excès des objets transportés sur la bande transporteuse (3) ou
- un dispositif de vibration mécanique (23) secouant une masse de confiserie en excès des objets transportés sur la bande transporteuse (3) ou
- un dispositif d'élimination (28) éliminant la masse de confiserie en excès entraînée par les objets transportés sur la bande transporteuse (3).
